# EUROPEAN PATENT APPLICATION

(11) **EP 3 082 059 A1**
(43) Date of publication of application: **19.10.2016**
(21) Application number: 15305572.8
(22) Date of filing: 16.04.2015
(51) Int. Cl.: G06F 21/78

(54) **PERSONALIZED ACCESS TO STORAGE DEVICE**

(71) Applicant: ALCATEL LUCENT, 92100 Boulogne-Billancourt (FR)
(72) Inventor: Le Sauze, Nicolas, 91620 Nozay (FR); Peloso, Pierre, 91620 Nozay (FR)
(74) Representative: Mouney, Jérôme

(57) **Abstract**

For a personalized access to a storage device (SD) from a communication device (CD), public data and private data being stored in the storage device (SD), the storage device (SD) is configured to:
retrieve an identifier of the communication device (CD),
allow access to public data and private data if the retrieved identifier is included in a first list (Lf) of communication devices,
deny access to private data if the retrieved identifier is not included in said first list (Lf) of communication devices.

## Description

### FIELD OF THE INVENTION

The present invention pertains to the management of access to a storage device, in order to access data stored in the storage device.

### BACKGROUND

Portable storage devices of type hard disks, such as USB thumb drives, are per definition following users and are likely to be shared with other users. For example, it is common for a user attending a meeting to wish to share on a USB thumb drive a document with another person. For confidentiality purpose, the user should check all other material stored on the USB thumb drive and possibly remove critical material before handing the USB thumb drive to the other person.

Currently, there is no solution to have an automated check on the storage device disk so that the user does not have to care about what is stored on the storage device when connecting it to a computer.

### SUMMARY

This summary is provided to introduce concepts related to the present inventive subject matter. This summary is not intended to identify essential features of the claimed subject matter nor is it intended for use in determining or limiting the scope of the claimed subject matter.

In accordance with one embodiment, a method is provided for a personalized access to a storage device from a communication device, the method comprising the following steps:
retrieving an identifier of the communication device,
allowing access to public data and a set of private data stored in the storage device if the retrieved identifier is included in a list of communication devices,
denying access to said set of private data if the retrieved identifier is not included in said list of communication devices.

Advantageously, when the storage device is connected to the computer of the user (or any "friendly" device), the user can see all the content of the storage device, but when the storage device is connected to a "foreign" device, only the public part of the content can be accessed. The automatic access to private or public data in the storage device promotes the use and the share of the storage device in any circumstances.

The solution improves personalization capabilities of all portable storage devices, making them more friendly to use and share.

In an embodiment, the identifier is detected automatically by the storage device once the storage device is connected to the communication device, via a point to point connection.

In an embodiment, the identifier is included in a message sent from the communication device.

In an embodiment, the message is sent in response to a request from the storage device.

In an embodiment, different sets of private data are respectively associated with different lists of communication devices.

In an embodiment, another communication device is allowed access to public data and another set of private data stored in the storage device if the retrieved identifier of said another communication device is included in another list of communication devices.

In an embodiment, the identifier uniquely identifies the communication device.

In an embodiment, the identifier is a MAC address of the communication device.

In an embodiment, the identifier is a serial number associated with the communication device.

In an embodiment, a communication device whose identifier is not included in any list of communication devices has only access to public data.

In an embodiment, an identifier of another communication device can be added in one list of communication devices via the communication device, if the identifier of the communication device is included in said list of communication devices.

In an embodiment, the identifier of the communication device is automatically added to one list of communication devices to grant full access to data stored in the storage device, if the communication device is the first communication device to which the storage device is connected.

The invention relates also to a storage device for a personalized access to a storage device from a communication device, the storage device being configured to:
retrieve an identifier of the communication device,
allow access to public data and a set of private data stored in the storage device if the retrieved identifier is included in a list of communication devices, deny access to private data if the retrieved identifier is not included in said first list of communication devices.

The invention also pertains to a computer program capable of being implemented within a device, said program comprising instructions which, when the program is executed within said device, carry out steps according to the inventive method.

The present invention and the benefits thereof shall be better understood upon examining the description below, which makes reference to the attached figures, in which:
- FIG. 1 is a schematic block diagram of a communication system according to one embodiment of the invention for a personalized access to a storage device; and
- FIG. 2 is an algorithm of a method for a personalized access to a storage device according to one embodiment of the invention.

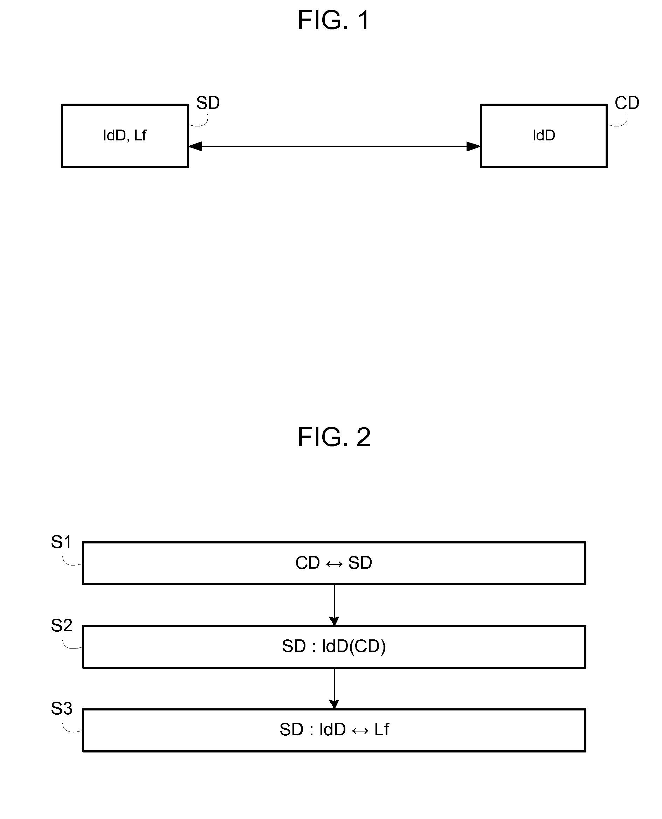

With reference to FIG. 1, a communication system according to the invention comprises a storage device SD and a communication device CD.

The communication device CD is capable of connecting directly with the storage device SD or is capable of establishing a communication with the storage device SD via a wired or wireless connection, in order to access to the content stored in the storage device, as a point to point connection.

The communication device CD can be a personal computer or a laptop, a tablet, a smart phone, a personal digital assistant, a set-top box, a residential gateway, a game console or a connected television, for instance. More generally it concerns any type of electronic equipment comprising a communication module, capable of establishing connection with the storage device SD to exchange data such as messages with the storage device.

The storage device SD may store different kinds of files, and differentiate private data and public data. To this end, the storage device SD may use two distinct folders, one for each type of information, with the possibility of having inner subfolders. In other embodiments, a public or private part can be defined by the file system features (e.g. Ext3)

The storage device SD may also ask the user if data are for public or private usage and keep the information given by the user in metadata of the stored data.

The storage device SD may display the private data in different ways when connected to a communication device that is unknown or declared non friendly, like a public computer. Private data can either be hidden or appear as being encrypted files or folders, with a possibility to be accessed with correct credentials.

The storage device SD may be of different natures.

It is assumed that the storage device SD and the communication device CD are connected point to point via a wired or wireless connection.

In an embodiment, the storage device SD and the communication device CD can be connected under a communication session established via at least one of the wireless communication protocols among Bluetooth protocol, Near field communication (NFC) protocol, Bluetooth and Wifi Direct.

In an embodiment, the communication device CD and the storage device SD can be connected under a communication session established via a wired communication protocol such as USB or Ethernet protocol.

In one example, the storage device SD is a USB thumb drive or a hard drive to be connected directly to a communication device via a USB cable.

In another example, the storage device SD is a personal computer, a laptop, a tablet or a smart phone.

In another example, the storage device SD is a connected object such as an advertisement board, a television set, a household appliance, a communication terminal, a fridge, a camera. A connected object comprises a network interface that is part of a data processing unit that may be directly embedded in the connected object.

In one embodiment, the storage device SD implements an application that determines an identifier IdD of the communication device to which the storage device is connected.

In another embodiment, the application is implemented in the communication device.

In another embodiment, the source code of the application is stored in the storage device, and executed by a processing unit of the communication device when connected to the storage device.

The identifier IdD should be unique and represent uniquely the communication device.

For example, the identifier IdD of the communication device is the MAC (media access control) address of the communication device. The MAC address can be retrieved from any kind of communication device, whatever the nature of the storage device. In one example wherein the storage device is a USB thumb drive or a hard drive, the application is able to detect a MAC address of the communication device to which the storage device is connected. The MAC address can be the MAC address of the Ethernet card or the WiFi card.

In another example, the identifier IdD of the communication device is a serial number associated with the communication device. It can be the serial number of the communication device itself or the serial number of a component inherent to the communication device.

In another example, the identifier IdD is the USB identifier of the USB interface of the communication device, in case the storage device is connected to the communication device via a USB cable.

In another example, the identifier IdD is a parameter associated with the communication device for establishing a point to point wireless connection with the storage device, such as a Bluetooth name of the communication device.

If the identifier IdD of the communication device is known and declared friendly, private data and all the public in the storage device can be accessed from the communication device.

If the identifier IdD of the communication device is unknown or declared non friendly, only the public data in the storage device can be accessed from the communication device.

The application manages at least one list Lf of friendly communication devices that have access to data stored in the storage device, both private and public data. The list can be modified manually by the user through a dedicated management interface requiring credentials or without credentials if the storage device is connected to a friendly communication device. A communication device is considered as friendly if its identifier is included in a list Lf of friendly communication devices.

The application can manage several lists of friendly communication devices, each list allowing access to public data and a set of private data. Thus different sets of private data are respectively associated with different lists of communication devices. In one embodiment, an identifier of a communication device cannot be included in more than one list. In one embodiment, there is one list of communication devices that gives access to all the public and private data. The association of lists with sets of private data may be initially done by the developer of the application or may be modified by the user through a dedicated management interface.

The first time the storage device is connected to a communication device, the identifier of the communication device is learnt by the application. The identifier is put in a list of friendly communication devices to grant full access to data stored in the storage device. Per default, it is assumed the first use of the storage device is done with a friendly communication device.

The application in the storage device allows to add new identifiers to the list of friendly communication devices. Per default, it is assumed that another communication device is considered non friendly the first time it is connected to the storage device.

In one example, the identifier IdD can be associated with a given profile only via a friendly communication device, such as the smartphone of the user, requiring or not a password from the user.

In another example, the identifier IdD can be associated with a given profile via any communication device, requiring a password from the user.

In one embodiment according to which the identifier IdD is a MAC address, when a new MAC address is detected, the application ask the user whether the communication device corresponding to the new detected MAC address should be added to the list of friendly communication devices, with a password required from the user. To avoid inviting user to declare if the communication device is friendly each time the storage device is connected to a non-friendly communication device, a list of non-friendly devices can also be stored in the storage device. Thus only the very first time a new MAC address is detected, the question to select the communication device as friendly device is raised. If a communication device initially classified as non-friendly has to be reclassified as friendly, the modification can be done by a manual addition of the MAC address of the communication device to the list of friendly communication devices and via an existing friendly communication device.

If the application manages several lists of communication device, it can ask the user in which list an identifier of communication device has to be put.

With reference to FIG. 2, a method for a personalized access to a storage device according to one embodiment of the invention comprises steps S1 to S3 executed within the communication system.

In step S1, the storage device SD is connected to a communication device CD. It is assumed the storage device is owned by a given user, the communication device may be owned by the user or not.

In step S2, the application in the storage device retrieves an identifier IdD of the communication device, the identifier being unique and uniquely identifies the communication device. For example, the identifier is a MAC address.

The identifier IdD is retrieved automatically by the application by an automatic detection of the identifier once the storage device is connected to the communication device, via a point to point connection. The identifier is included in a message sent from the communication device, possibly in response to a request from the storage device. The point to point connection can be a wired or wireless connection.

In case the storage device is a USB thumb drive or a hard drive, the application is able to detect an identifier of the communication device to which the storage device is connected, like a MAC address. The application in the storage device interrogates an operating system of the communication device to retrieve said identifier.

In step S3, the application in the storage device allows access to public data and a set of private data if the identifier of the communication device is included in a list Lf of friendly communication devices, and denies access to private data if the identifier of the communication device is not included in the list Lf of friendly communication devices.

In one embodiment, different sets of private data are respectively associated with different lists Lf of communication devices. In one example, a list Lf of communication devices does not have any identifier in common with another list of communication devices. More generally, the association of lists with sets of private data may be initially done by the developer of the application or may be modified by the user through a dedicated management interface.

If another communication device is connected to the storage device, if the retrieved identifier of said another communication device is included in another list Lf of communication devices, it is allowed access to public data and to another set of private data.

In one example, there are two lists associated with different set of data and three people Alice, Bob and Sam wish to access data in the storage device. The identifier of the communication device of Alice is included in the list number one and the communication device has access to public data A, public data B, private data C and private data D. The identifier of the communication device of Bob is included in the list number two and the communication device has access to public data A, public data B, private data D and private data E. The identifier of the communication device of Sam is not included in any list and the communication device has only access to public data A and public data B.

The invention described here relates to a method and a device for a personalized access to a storage device. According to one implementation of the invention, the steps of the invention are determined by the instructions of a computer program incorporated into the device, such as the storage device SD or the communication device CD. The program comprises program instructions which, when said program is loaded and executed within the device, carry out the steps of the inventive method.

Consequently, the invention also applies to a computer program, particularly a computer program on or within an information medium, suitable to implement the invention. This program may use any programming language, and be in the form of source code, object code, or intermediate code between source code and object code, such as in a partially compiled form, or in any other form desirable for implementing the inventive method.

## Claims

1. A method for a personalized access to a storage device (SD) from a communication device (CD), the method comprising the following steps:
retrieving an identifier of the communication device (CD),
allowing access to public data and a set of private data stored in the storage device (SD) if the retrieved identifier is included in a list (Lf) of communication devices,
denying access to said set of private data if the retrieved identifier is not included in said list (Lf) of communication devices.

2. A method according to claim 1, whereby the identifier is detected automatically by the storage device once the storage device is connected to the communication device, via a point to point connection.

3. A method according to claim 2, whereby the identifier is included in a message sent from the communication device.

4. A method according to claim 3, whereby the message is sent in response to a request from the storage device.

5. A method according to any of the claim 1 to 4, whereby different sets of private data are respectively associated with different lists (Lf) of communication devices.

6. A method according to claim 5, whereby another communication device is allowed access to public data and another set of private data stored in the storage device (SD) if the retrieved identifier of said another communication device is included in another list (Lf) of communication devices.

7. A method according to any of the claim 1 to 6, whereby the identifier uniquely identifies the communication device.

8. A method according to claim 7, whereby the identifier is a MAC address of the communication device.

9. A method according to claim 7, whereby the identifier is a serial number associated with the communication device.

10. A method according to any of the claim 1 to 9, whereby a communication device whose identifier is not included in any list (Lf) of communication devices has only access to public data.

11. A method according to any of the claim 1 to 10, whereby an identifier of another communication device can be added in one list of communication devices via the communication device, if the identifier of the communication device is included in said list of communication devices.

12. A method according to any of the claim 1 to 11, whereby the identifier of the communication device is automatically added to one list of communication devices to grant full access to data stored in the storage device, if the communication device is the first communication device to which the storage device is connected.

13. A storage device (SD) for a personalized access to a storage device (SD) from a communication device (CD), the storage device (SD) being configured to:
retrieve an identifier of the communication device (CD),
allow access to public data and a set of private data stored in the storage device (SD) if the retrieved identifier is included in a list (Lf) of communication devices,
deny access to private data if the retrieved identifier is not included in said first list (Lf) of communication devices.

14. A computer program capable of being implemented within a storage device (SD) for a personalized access to the storage device (SD) from a communication device (CD), said program comprising instructions which, when the program is loaded and executed within said storage device, carry out the following steps:
retrieving an identifier of the communication device (CD),
allowing access to public data and a set of private data stored in the storage device (SD) if the retrieved identifier is included in a list (Lf) of communication devices,
denying access to private data if the retrieved identifier is not included in said list (Lf) of communication devices.

15. A computer program capable of being implemented within a communication device for a personalized access to a storage device (SD) from the communication device (CD), said program comprising instructions which, when the program is loaded and executed within said communication device, carry out the following steps:
retrieving an identifier of the communication device (CD),
allowing access to public data and a set of private data stored in the storage device (SD) if the retrieved identifier is included in a list (Lf) of communication devices,
denying access to private data if the retrieved identifier is not included in said list (Lf) of communication devices.
